# EUROPÄISCHE PATENTANMELDUNG

(11) **EP 2 154 505 A2**
(43) Veröffentlichungstag der Anmeldung: **17.02.2010**
(21) Anmeldenummer: 09165631.4
(22) Anmeldetag: 16.07.2009
(51) Int. Cl.: G01M 3/00, G01N 17/00

(54) **Regenkabine**

(30) Priorität: 29.07.2008 DE 202008010160 U
(71) Anmelder: POLO EXPRESSVERSAND Gesellschaft für Motorradbekleidung und Sportswear mbH, 41363 Jüchen (DE)
(72) Erfinder: Lentzen, Petra, 47844 Willich (DE)
(74) Vertreter: Kluin, Jörg-Eden

(57) **Zusammenfassung**

Regenkabine (100), mit einer zumindest spritzwasserdichten, zumindest teilweise durchsichtigen Abgrenzung (1, 1', 1", 1"'), mit einem Wasseraustrittsbauteil (2) und einer Wasserauffangvorrichtung (3), bei der ein geschlossener Wasserkreislauf mit mindestens einer Pumpe (7, 7') vorgesehen ist.

## Beschreibung

Die Erfindung betrifft eine Regenkabine zur Simulation von Regenwetter.

Derartige Kabinen sind beispielsweise aus dem Automobilbau bekannt, wo sie dazu dienen, etwa die Regendichtigkeit von Cabrioverdecks zu testen. Die Erfindung hat es sich zur Aufgabe gemacht, eine Regenkabine zu schaffen, die besonders gut dafür geeignet ist, die Wasserfestigkeit von Bekleidung zu demonstrieren.

Diese Aufgabe wird durch die in Anspruch 1 wiedergegebene Regenkabine gelöst. Die erfindungsgemäße Regenkabine weist ein Wasseraustrittsbauteil und eine Wasserauffangvorrichtung sowie eine zumindest spritzwasserdichte, zumindest teilweise durchsichtige Abgrenzung auf. Sie weist einen geschlossenen Wasserkreislauf mit mindestens einer Pumpe auf. Die Kabine ist hierdurch bei geringer Wasserinanspruchnahme für den Dauerbetrieb geeignet.

In der bevorzugten Ausführungsform umfasst die Kabine ein Kleidungsstück oder einen Teil eines Kleidungsstücks, welches dauerhaft in der Regenkabine angeordnet ist. Das Kleidungsstück oder der Teil eines Kleidungsstücks durchbricht die Abgrenzung und weist eine Öffnung nach außen auf. Um den Nutzer und auch den Boden, auf dem die Kabine aufgestellt ist, vor Wasser zu bewahren, ist die Durchbrechung zumindest spritzwasserdicht abgedichtet. Auf diese Weise ist es möglich, dass bei laufendem Wasser ein Körperteil von außerhalb der Abgrenzung in die Kabine verbracht werden kann, ohne dass eine Abgrenzung geöffnet werden muss und ohne dass die zumindest Spritzwasserdichtigkeit der Abgrenzung beseitigt wird. Die derartige, beispielsweise in einem Ladenlokal aufgestellte Regenkabine ermöglicht es etwa einem Kunden, auf äußerst einfache, schnelle und komfortable Weise die Wasserdichtigkeit von Bekleidung zu testen. Hierzu ist es nicht erforderlich, dass er sich vollständig mit regendichter Kleidung ausrüstet und in die Regenkabine begibt. Vielmehr kann er im Trockenen außerhalb der Kabine verbleiben und lediglich einen Teil seines Körpers, etwa einen Arm, in die Kabine stecken. Die dauerhafte Anordnung des Kleidungsstücks oder Teils des Kleidungsstücks in der Kabine, und die Möglichkeit, eine lang andauernde Besprengung zu realisieren, macht die Kabine auch besonders zur Demonstration der Dauerwasserfestigkeit von Bekleidung geeignet.

Um die Attraktivität der Regenkabine zu erhöhen, ist es in der bevorzugten Ausführungsform vorgesehen, dass in der Kabine eine Schaufensterpuppe in wasserdichter Kleidung ausgestellt ist.

In einer bevorzugten Ausführungsform ist ein Wasserspeicher vorgesehen, der mehrere verschiedene, miteinander verbundene Elemente umfasst.

In einer bevorzugten Ausführungsform umfasst der Wasserspeicher unter der Wasserauffangvorrichtung in Schleifen gelegte Rohre.

Zweckmäßig umfasst der Wasserspeicher mindestens einen Kanister.

Vorzugsweise sind drei miteinander verbundene Kanister vorgesehen.

Diese umfassen bevorzugt jeweils 19 Liter.

Die Verbindung der Kanister erfolgt vorzugsweise über ein PVC-U-Leitungssystem, welches verklebt wird. Dieses PVC ohne Weichmacher zeichnet sich dadurch aus, dass es dauerhafte, sichere Verbindungen gewährleistet und eine lange Lebensdauer bietet.

In der bevorzugten Ausführungsform wird der Wasserkreislauf durch zwei an verschiedenen Stellen des Wasserkreislaufs angeordnete Pumpen betrieben.

Versuche haben gezeigt, dass sich eine besonders vorteilhafte Ausführungsform dann ergibt, wenn eine Pumpe zwischen den Rohren unter der Wasserauffangvorrichtung und den Kanistern angeordnet ist und die andere Pumpe zwischen den Kanistern und dem Wasseraustrittsbauteil.

Um ein Überlaufen eines Elements des Wasserkreislaufs, etwa der Wasserauffangvorrichtung oder eines oder mehrerer Elemente des Wasserspeichers, zu verhindern, ist in der bevorzugten Ausführungsform mindestens ein Schwimmerschalter vorgesehen, der bei Erreichen eines vorbestimmten Wasserstandes eine oder mehrere Pumpen abschaltet.

Um zur Vermeidung einer Geruchsbildung organische Stoffe aus dem Wasser zu filtern und das Wasser bei jedem Durchlauf weitestgehend zu reinigen, ist in einer Ausführungsform ein Wasserfilter vorgesehen.

Ebenfalls zur Vermeidung einer Geruchsbildung und zum Entkeimen des Wassers kann auch - besonders bevorzugt im Zulauf zu den Kanistern - ein Ozonwasseraufbereitungsgerät vorgesehen sein.

Da sich gezeigt hat, dass ein Betrieb des Ozonwasseraufbereitungsgeräts über einen kurzen Zeitraum pro Tag ausreicht, um diesen Zweck zu erfüllen, ist das Ozonwasseraufbereitungsgerät in der bevorzugten Ausführungsform per Zeitschaltuhr für täglich wenige Minuten aktivierbar und anschließend deaktivierbar.

Es ist bevorzugt, dass die Regenkabine Produktinformation umfasst.

Es können Flatscreens mit Produktinformation vorgesehen sein.

Um die Attraktivität der Regenkabine weiter zu erhöhen, ist in der bevorzugten Ausführungsform eine Vorrichtung vorgesehen, die eine Vitrine aufweist, in der Produktdetails ausgestellt sind.

Die Begrenzungen der Regenkabine können Glas umfassen, welches innen eine Nanobeschichtung aufweist. Hierdurch können Wasserflecken vermieden werden und das Wasser kann schneller ablaufen.

Bei dem Glas kann es sich um Sicherheitsglas handeln. Hierdurch kann die Gefahr des Glasbruchs und der Verletzung von Benutzern verringert werden.

Der Wasserkreislauf der Regenkabine weist in einer Ausführungsform einen Wasseranschluss auf, über den der Wasserkreislauf befüllt werden und auch wieder entleert werden kann.

Die Abschottung des Wasseranschlusses erfolgt bevorzugt über einen Kugelhahn, an dem beispielsweise ein Wasserschlauch anschließbar ist.

Die Kanister weisen zweckmäßigerweise eine Markierung auf, die über die korrekte Befüllung des Wasserkreislaufes informiert.

Die Erfindung soll nun anhand von in den Zeichnungen dargestellten Ausführungsbeispielen näher erläutert werden. Es zeigen:

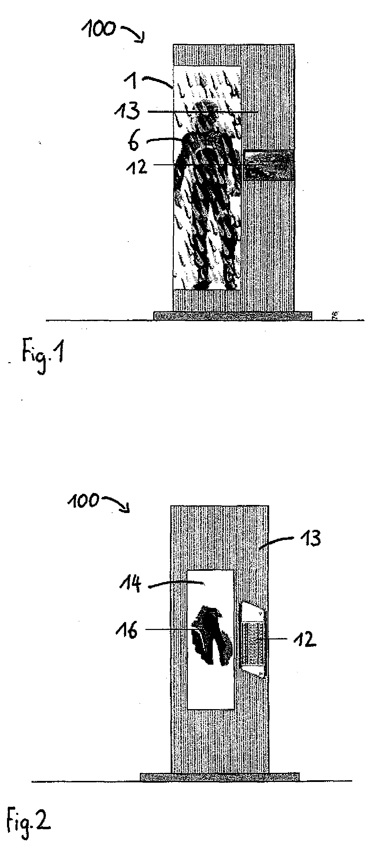

- Fig. 1: eine Seitenansicht der erfindungsgemäßen Regenkabine;
- Fig. 2: eine Rückansicht der erfindungsgemäßen Regenkabine;

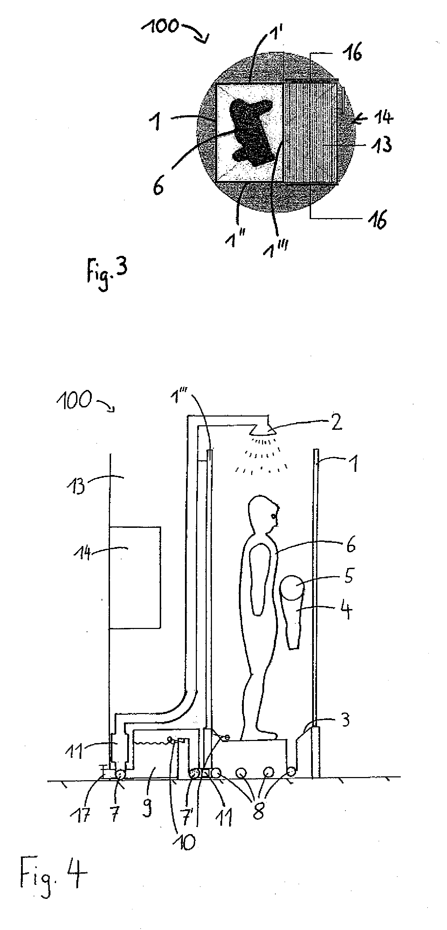

- Fig. 3: eine Ansicht von oben auf die erfindungsgemäße Regenkabine;
- Fig. 4: eine seitliche Querschnittsansicht der erfindungsgemäßen Regenkabine;

Die als Ganzes mit 100 bezeichnete erfindungsgemäße Regenkabine umfasst vier Abgrenzungen 1, 1', 1'', 1''', ein Wasseraustrittsbauteil 2, eine Wasserauffangvorrichtung 3 und einen aus Rohren 8, die unter der Wasserauffangvorrichtung angeordnet sind und drei 19 Liter Kanistern 9, von denen in der Zeichnung nur einer dargestellt ist, bestehenden Wasserspeicher. Zudem sind ein Filter 11, zwei Pumpen 7, 7' und ein Wasseraufbereitungsgerät 11 vorgesehen.

In der Kabine ist eine mit wasserdichter Kleidung ausgestattete Schaufensterpuppe 6 ausgestellt.

Zudem ist ein von außen zugänglicher Ärmel 4 einer wasserdichten Jacke an einer Durchbrechung 5 in der Kabine 100 so vorgesehen, dass kein Wasser aus der Durchbrechung austritt.

Das Wasser strömt aus dem Wasseraustrittsbauteil 2 über die Schaufensterpuppe und den Ärmel in die Wasserauffangvorrichtung 3, von wo es in die unter dieser Vorrichtung in Schleifen gelegten Rohre 8 weiterfließt. Diese Rohre umfassen Hochtemperaturrohre. Je nach Schaltstellung einer Zeitschaltuhr durchquert es danach ein Ozonwasseraufbereitungsgerät 11 oder wird direkt von der Pumpe 7' in die drei Kanister 9 gepumpt. Die drei Kanister 9 sind über ein PVC-U-Leitungssystem (verklebt) verbunden und stellen das Haupt-Wasserreservoir für die Regenkabine 100 dar. Von diesen Kanistern 9 wird das Wasser weiter über eine Pumpe 7 durch einen Filter 11, der einen Kartuschenfilter umfasst, zurück zu dem Wasseraustrittsbauteil 2 gepumpt. Hinter dem Kartuschenfilter ist ein ½" Wasseranschluss vorgesehen. Die Verbindung zum Wasseraustrittsbauteil 2, welches einen Duschkopf umfasst, erfolgt über einen flexiblen Schlauch.

In der Wasserauffangvorrichtung 3, die eine Duschtasse umfasst, und in einem Kanister 9 ist ein Schwimmerschalter 10 angeordnet, der bei Überschreiten eines jeweils vorbestimmten Wasserstandes die im Wasserkreislauf jeweils davor angeordnete Pumpe ausschaltet.

Zur Befüllung und Entleerung der Regenkabine 100 ist ein ½" Wasseranschluss 17 vorgesehen, der über einen Kugelhahn abgeschottet ist und an den z.B. ein Wasserschlauch angeschlossen werden kann. Die Kanister 9 weisen eine Markierung auf, die über den richtigen Wasserstand informiert. Die Befüllung und Entleerung kann auch über die Einfüllöffnung eines Kanisters 9 erfolgen.

Die Abgrenzungen 1,1',1'',1''', umfassen eine Duschkabine, die zerlegt geliefert wird und die ein Rahmengestell sowie nanobeschichtetes Sicherheitsglas aufweist.

Die Abgrenzung 1''' grenzt an eine Vorrichtung 13 an, in der neben Bestandteilen des Wasserkreislaufes eine Vitrine 14 vorgesehen ist. In dieser ist beispielsweise ein geschnittenes Produkt, welches den Blick auf den wasserdichten Aufbau freigibt, ausgestellt. An der Rückseite der Vorrichtung 13 sind zudem weitere Produktinformationen 12 vorgesehen. Die Vorrichtung 13 weist an ihren Seitenflächen je einen Flatscreen 12 auf, der ebenfalls Informationen zu Produkten bereithält.

Die Abgrenzungen 1, 1', 1 ", 1''' der Regenkabine 100 sind aus Sicherheitsglas vorgesehen, welches innen eine Nanobeschichtung aufweist. Die Abgrenzungen sind etwa 1.800 mm hoch. Die vordere Abgrenzung 1 ist Bestandteil einer Schwingtür.

Die Wasserauffangvorrichtung steht in einem Spanplattengehäuse auf einem Schaumstoffpolystyrolträger. Die Höhe der Wasserauffangvorrichtung 3 mit Unterkonstruktion liegt im Bereich zwischen 200 und 300 mm.

Die Verbindung von Filter 11 und Wasseraustrittsteil 2 kann über einen flexiblen Schlauch erfolgen.

Das Wasseraustrittsbauteil 2 simuliert den Regeneffekt und ist an der hinteren Abgrenzung 1''' angebracht. Das Wasseraustrittsbauteil 2 kann auch an der Decke angebracht werden. Die Rohre 8 sind als Hochtemperaturrohre vorgesehen.

### Bezugszeichenliste

- 100: Regenkabine
- 1, 1', 1'', 1"': Abgrenzung
- 2: Wasseraustrittsbauteil
- 3: Wasserauffangvorrichtung
- 4: Kleidungsstück
- 5: Durchbrechung
- 6: Schaufensterpuppe
- 7, 7': Pumpe
- 8: Rohre unter der Wasserauffangvorrichtung
- 9: Kanister
- 10: Schwimmerschalter
- 11: Ozonwasseraufbereitungsgerät
- 12: Produktinformation
- 13: Vorrichtung
- 14: Vitrine
- 15: Produktdetails
- 16: Flatscreens
- 17: Wasseranschluss

## Patentansprüche

1. Regenkabine (100), mit einer zumindest spritzwasserdichten, zumindest teilweise durchsichtigen Abgrenzung (1, 1', 1 ", 1"'), mit einem Wasseraustrittsbauteil (2) und einer Wasserauffangvorrichtung (3), **dadurch gekennzeichnet, dass** ein geschlossener Wasserkreislauf mit mindestens einer Pumpe (7, 7') vorgesehen ist.

2. Regenkabine nach Anspruch 1, **dadurch gekennzeichnet, dass** ein Kleidungsstück (4) oder Teil eines Kleidungsstücks (4) vorgesehen ist, welches dauerhaft in der Regenkabine (100) angeordnet ist und die Abgrenzung (1) zumindest spritzwasserdicht abgedichtet durchbricht (5) und eine Öffnung nach außen aufweist.

3. Regenkabine nach Anspruch 1 oder 2, **dadurch gekennzeichnet, dass** in der Kabine (100) eine mit wasserdichter Kleidung ausgerüstete Schaufensterpuppe (6) angeordnet ist.

4. Regenkabine nach einem der Ansprüche 1 bis 3, **dadurch gekennzeichnet, dass** ein Wasserspeicher vorgesehen ist, der mehrere einzelne, miteinander verbundene Elemente (3, 8, 9) umfasst.

5. Regenkabine nach einem der Ansprüche 1 bis 4, **dadurch gekennzeichnet, dass** ein Wasserspeicher vorgesehen ist, der unter der Wasserauffangvorrichtung (3) in Schleifen angeordnete Rohre (8) umfasst.

6. Regenkabine nach einem der Ansprüche 1 bis 5, **dadurch gekennzeichnet, dass** ein Wasserspeicher vorgesehen ist, der mindestens einen Kanister (9) umfasst.

7. Regenkabine nach Anspruch 6, **dadurch gekennzeichnet, dass** drei miteinander verbundene Kanister (9) vorgesehen sind.

8. Regenkabine nach einem der Ansprüche 1 bis 7, **dadurch gekennzeichnet, dass** zwei Pumpen (7, 7') an verschiedenen Stellen des Wasserkreislaufs vorgesehen sind.

9. Regenkabine nach einem der Ansprüche 1 bis 8, **dadurch gekennzeichnet, dass** mindestens ein Schwimmerschalter (10) vorgesehen ist, der ein Überlaufen eines Elements des Wasserkreislaufs durch Abschalten einer oder mehrerer Pumpen (7, 7') verhindert.

10. Regenkabine nach einem der Ansprüche 1 bis 9, **dadurch gekennzeichnet, dass** ein Wasserfilter (11) vorgesehen ist.

11. Regenkabine nach einem der Ansprüche 1 bis 10, **dadurch gekennzeichnet, dass** ein Ozonwasseraufbereitungsgerät (11) vorgesehen ist.

12. Regenkabine nach Anspruch 11, **dadurch gekennzeichnet, dass** das Ozonwasseraufbereitungsgerät (11) per Zeitschaltuhr an- und abschaltbar ist.

13. Regenkabine nach einem der Ansprüche 1 bis 12, **dadurch gekennzeichnet, dass** die Regenkabine 100 Produktinformation (12) umfasst.

14. Regenkabine nach einem der Ansprüche 1 bis 13, **dadurch gekennzeichnet, dass** die Abgrenzung (1, 1', 1 ", 1"') Glas umfasst, welches mit einer Nanobeschichtung ausgerüstet ist.

15. Regenkabine nach einem der Ansprüche 1 bis 14, **dadurch gekennzeichnet, dass** ein Wasseranschluss (17) zum Befüllen und Entleeren des Wasserkreislaufs vorgesehen ist.
